# EUROPEAN PATENT APPLICATION

(11) **EP 1 906 301 A1**
(43) Date of publication of application: **02.04.2008**
(21) Application number: 06425655.5
(22) Date of filing: 26.09.2006
(51) Int. Cl.: G06F 9/40

(54) **Method and system for deploying an application**

(71) Applicant: Nokia Siemens Networks GmbH & Co. KG, 81541 München (DE)
(72) Inventor: Militaru, Adrian, 20043 Arcore (MI) (IT); Toniatti, Tiziana, 20149 Milano (IT)

(57) **Abstract**

Unfortunately, known application deployment methods require the download of entire applications, implying a cost in term of network capacity resources and their bandwidth utilization.

The method and system for deploying an application on a host device (MT1, FT2, AS1, AS2) according to the present invention, comprise:
a) providing the host device (MT1, FT2, AS1, AS2) with a functionality for running an application definable via a state machine (SM);
b) providing the host device (MT1, FT2, AS1, AS2) with functional modules (FM1, FM2, ..); each functional module (FM1, FM2, ..) comprising a set of executable methods; and
c) deploying the application on the host device (MT1, FT2, AS1, AS2) by storing, within the host device (MT1, FT2, AS1, AS2), tuples specifying the state machine (SM) defining the application; wherein a tuple defines an event (E1, E2, ..) generated transition from an initial state (S1, S2, ..) to an arrival state (S1, S2, ..) and a subset of the executable methods.

## Description

The present invention relates to a method according to the preamble of claims 1 and 8 and to a system according to the preamble of claim 9.

Nowadays, with the widespread of broadband datacom networks, service providers and network operators are looking for new ways to offer new value added services in order to increase their revenue stream.

To allow the offering of such new value added services, a large variety of new and attractive multimedia applications are being developed. Such new multimedia applications provide services that may combine voice, video, TV, web service components and/or messaging.

In order to enable their end-customer to benefit from the new multimedia offering, services providers desire applications that are easily deployable and updatable on host devices. As used herein, the term "host devices" refers to servers located at the service operator premises such as, for example, application server and it also refers to terminals used by end-user customers. Examples of end-user terminal include fixed devices, e.g. PCs, TV set-top-boxes, and mobile devices, e.g. portable laptops, mobile handheld devices.

Currently, multimedia applications, when deployed, need to be entirely stored and installed on the host devices. Unfortunately, during known deployment methods, the download of entire software applications on host-devices has a plurality of drawbacks.

A first drawback of known deployment methods is that the often consistent sizes of the applications to be downloaded may be costly in term of network capacity resources and their bandwidth utilization.

A second drawback is that the often consistent sizes of the applications may be costly in term of usage of the storage resources of the host devices, in particular of the end-user terminals, especially if mobile devices.

A third drawback is that applications that often require to be compiled on a large variety of different operating systems of host devices may require a high effort for development and testing, are error prone, and may require subsequent expensive technical interventions.

It is therefore the aim of the present invention to overcome the above mentioned drawbacks, in particular by providing a method and a system for deploying an application in a fast and efficient manner.

The aforementioned aim is achieved by a method and a system for deploying an application on a host device accessible via a network, the invention comprising:
a) providing the host device with a functionality for running an application definable via a state machine;
b) providing the host device with functional modules; each functional module comprising a set of executable methods; and:
c) deploying the application on the host device storing within the host device tuples specifying the state machine (SM) defining the application; wherein a tuple defines an event generated transition from an initial state to an arrival state and a subset of the executable methods.

The aforementioned aim is also achieved by a method and a system for developing an application on a host device, the invention comprising:
a) developing, for the host device, a functionality for running an application definable via a state machine;
b) providing for the host device functional modules; each functional module comprising a set of executable methods; and
c) developing the application for the host device by defining tuples specifying the state machine for the application; wherein a tuple defines an event generated transition from an initial state to an arrival state and a subset of the executable methods.

In the invention, the stored tuples specifying the state machine defining the application may preferably be downloaded from a repository server via the network.

Advantageously, in the invention, the stored tuples may be located in an additional repository server located within the host device.

Specifically, the stored tuples may be used to instantiate the state machine by a state machine manager module.

In the invention, the events, generated either by an user interface module or by the executable methods, may conveniently be managed by an event manager module.

Additionally, in the invention, the host devices may have the functionality of either end-user terminals or of application servers.

In the invention, the executable methods may preferably be contained within functional modules located within the host devices; the functional modules having an operating system independent layer and an operating system dependent layer.

With the proposed invention, during the application deployment and update phases, only a limited quantity of data is downloaded on the host devices. In fact, the data downloaded on the host device is the string of the application specific state machine and its related functions and not a whole executable program as it is the case in known deployment methods.

Advantageously, being the downloaded data limited in its size, the proposed invention provides a flexible solution, particularly suitable for the host devices for which memory and network bandwidth are often scarce/expensive resources.

The proposed invention allows the development and the update of new multimedia applications in a fast and efficient manner, being SAF applications defined by their state machines. The SAF multimedia applications are obtained as combinations of various executable methods such as audio, video, TV, web and/or messaging services. Since such service methods are installed in the host devices in an open and executable form within the SAF module, a programmer is enabled to develop a large variety of combinations of applications in a fast and easy way.

Moreover, the proposed invention allows portability to any kind of host device. Nowadays, the capability of supporting the convergence of fixed-mobile business scenarios is fundamental. Being the state machine operating system independent, the proposed invention allows interoperability with various types of operating systems and of devices, fixed devices like PCs, TV and set-top boxes, and portable devices like laptops, Pocket PCs.

Furthermore, the proposed invention is compliant with both peer-to-peer and client/sever applications scenarios and with any combination of them.

The invention will now be described in preferred but not exclusive embodiments with reference to the accompanying drawings, wherein:
- Figure 1: is a block diagram schematically illustrating a network architecture in an example embodiment according to the present invention;
- Figure 2: is a block diagram schematically illustrating component interactions in a further example embodiment according to the present invention;
- Figure 3: is a flow chart schematically illustrating a state machine for an application in a further example embodiment according to the present invention.

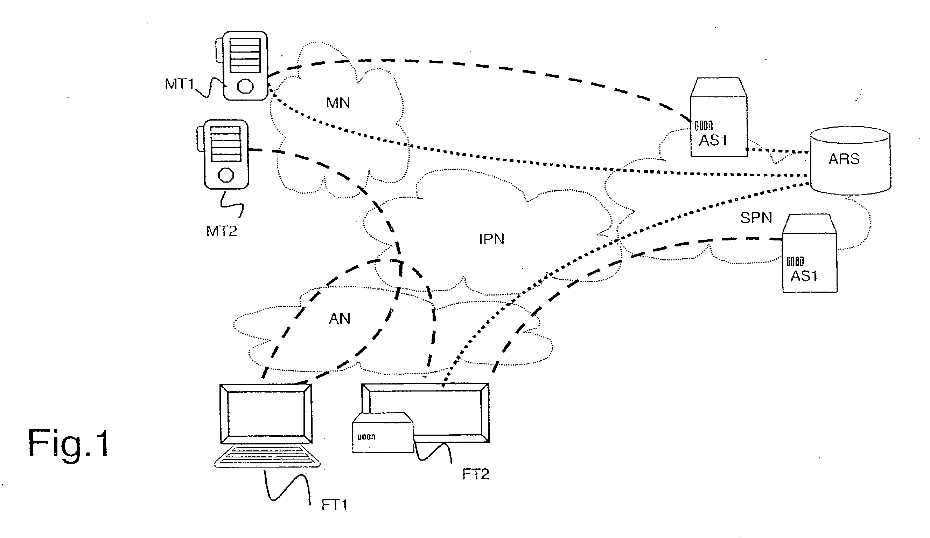

Figure 1 is a simplified block diagram illustrating a network architecture in an example embodiment according to the present invention.

A plurality of host devices MT1, FT2, AS1, AS2 may comprise mobile end-user terminals MT1, MT2, fixed end-user terminals FT1, FT2 and application servers AS1, AS2. Examples of mobile terminals MT1, MT2 are portable laptops and mobile handheld devices. Examples of fixed terminals are PCs and TV set-top-boxes.

The host devices MT1, FT2, AS1, AS2 are accessible via a network. The network may comprise:
- a mobile access network MN for accessing the mobile end-user terminals UT1, UT2;
- a fixed or a wireless access network AN for accessing fixed the fixed end-user terminals FT1, FT2;
- a service provider network SPN for hosting service provider equipment devices AS1, AS2, ARS; and
- an IP network IPN for data communications among the above mentioned network types MN, AN, SPN.

The service providers equipment devices AS1, AS2, ARS are located at the service provider network SPN and comprise the application servers AS1, AS2 and an application repository server ARS.

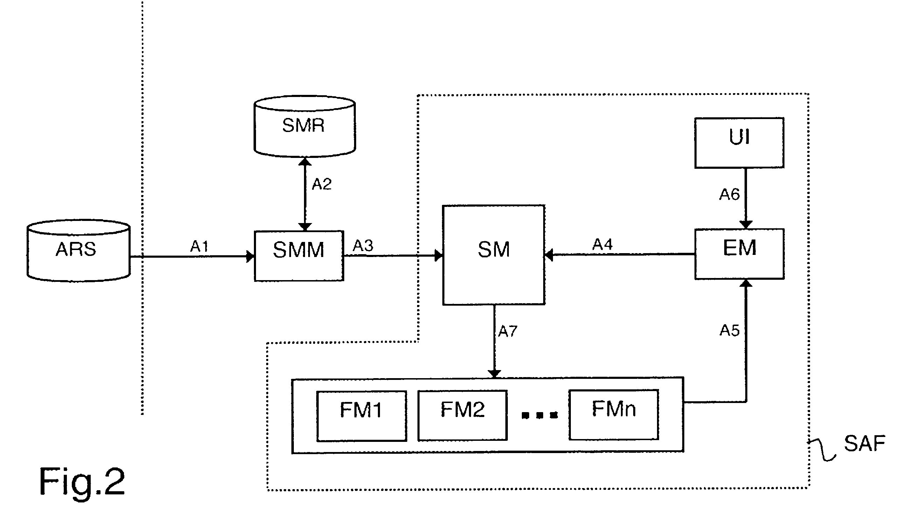

The host devices MT1, FT2, UT3, AS1, AS2 in accordance with the present invention, are provided with an arrangement of modules called Smart Adaptive Framework (SAF) as described in Figure 2.

Connections depicted with a dashed line in Figure 1 represent two types of communication flows among host devices MT1, FT2, AS1, AS2, i.e. client/server and peer-to-peer communication types.
For example, as shown in Figure 1, the first mobile terminal MT1 is in communication with the first application server AS1 in a client/server type of communication. The second fixed end-terminal FT2 is in a client/server communication with the second application server AS2. The second mobile terminal MT2 is in a peer-to-peer communication with the first fixed terminal FT1. The first fixed terminal is in a peer-to-peer communication with the second fixed terminal FT2.
Connections depicted with a dotted line represent the downloading, from the application repository server ARS to the host devices MT1, FT2, AS1, AS2 of the required data for the deployment of a specific application in accordance with the present invention.

The SAF framework, as shown in Figure 2, is realized with the following set of modules which are installable on the host devices:
- a state machine module SM;
- an event manager module EM;
- an user interface module UI;
- a set of functional modules FM1, FM2, ...

The state machine SM is specific for each application. In case of a client/server type of communication flow, the state machine of the application server AS1, AS2 is different than the state machine SM of the end-user terminals MT1, MT2, FT1, FT2. Instead, in case of peer to peer type of communication flow, the state machine SM may be the same for each end-user terminal MT1, MT2, FT1, FT2.

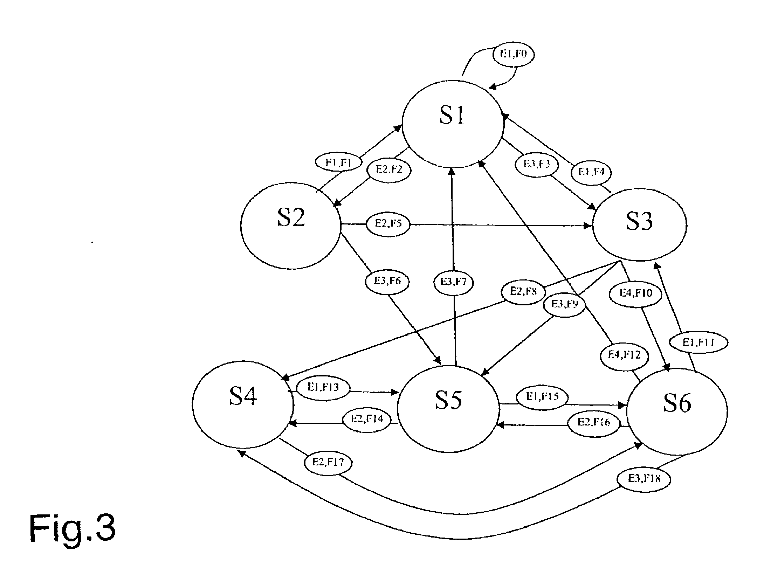

As shown in the example embodiment of Figure 3, the state machine SM is described by THE following elements:
- its finite number of states S1, S2, S3, S4, S5, S6;
- its transition events E1, E2, E3, E4, whereas they define the transition between states S1, S2, ...;
- its transition functions F1, F2, ..., whereas each transition function F1, F2, ... is defined by a certain set of calls to executable methods provided by the functional modules FM1, FM2, ...

As an example, the transition between the two states, state S1 and state S2, is triggered by a specific event E2 which may be generated either by the user interface UI or by the methods executed by the functional modules FM1, FM2, ... In correspondence of such transition between the two states S1 and S2, a transition function F2, itself defined by one or more methods, is performed.
In Figure 2, logical connection A7 depicts the flow existing between the state machine module SM and the set of functional modules FM1, FM2, .. via which the event generated transition functions F1, F2, .. are called by the state machine SM.

In mathematical terms, a generic state machine can be described as (Σ, S, s₀, δ, F) wherein:
- S defines the finite number of states S1, S2, ..;
- Σ defines the event transition set E1, E2, .. that for each state S1, S2, .. produces the invocation of transition functions F1, F2, .. and produces the transition towards another state S1, S2 ..... These transition functions F1, F2, .. make use of methods contained in the functional modules FM1, FM2, ..
- *s₀* defines an initial state, belonging to *S,* typically being what is called the IDLE state;
- δ defines the transition function set: F1, F2, .. that for each state of S, when a particular event defined in Σ is produced, makes use of methods contained in the functional modules.;
- F defines a final set of states. This final set of states may be the IDLE state or it may be an ad hoc defined final state in which all the variables are cleared thus allowing a safe exiting from the application.

While each application has its own specific state machine SM, the event manager EM is the same for every SAF application.

However, in different host devices MT1, FT2, AS1, different instantiations of the event manager EM may be done, e.g., with a different maximum number of events.

The event manager EM manages the events E1, E2,.. generated by call-backs from the user interface UI or generated by the execution of specific methods contained in the functional modules FM1, FM2,.. . Examples of user-interface generated events E1, E2, .. are inputs from screen/display (e.g., the user selects a screen button), keyboard inputs. Examples of method generated events E1, E2, are arrivals of multimedia messages or audio/video frames, time-out expiring functions.

The events E1, E2, ... received by the event manager module EM via logical connections A6, A5 are stored in the module itself and served with FIFO scheduling. From the event manager EM, each output event E1, E2 acts as input trigger, via logical connection A4, for the state machine SM.

Conveniently, the event manager EM may perform checks on the events E1, E2, .. and, for example, discard double events or it may implement priorities, e.g., certain type of events E1, E2, .. may be served first and some low priority one may be discarded.

The user interface module UI is specific for the specific operating system present in the host-device but produces the same events E1, E2, ... For example, when a user selects, on the host device MT1, FT2, AS1, with the mouse, a certain box on the screen, the same type of event is generated, e.g. the start of an application. All the applications in the same device type use the same user interface UI however, each application may require a slightly different layout (more/less commands buttons).

Examples of user interfaces UI are windows for the user screen, buttons for user commands, e.g., start, stop, refresh, show contacts and application responses.
Typically for the end-user terminals MT1, MT2, FT1, FT2 the user interface UI is in the form of a GUI while for the application servers AS1, AS2 the user interface UI is in form of a text script.

The functional modules FM1, FM2, .. are the same for every SAF application. Conveniently, each type of host device MT1, FT2, AS1 may have a different set of functional modules FM1, FM2, e.g. if there is not a video screen or a camera, the video module/camera functional module may not be present. However, a basic set of functional modules FM1, FM2 is guaranteed so as to allow interoperability among different device types.

The set of functional modules FM1, FM2, .. provides a certain set of basic methods and interfaces for implementing a class of services. For example a SIP functional module FM1, FM2, .. contains typical SIP methods, e.g. register SIP session, open SIP session, send SIP message.

The transition functions F1, F2, downloaded from the application repository server ARS as part of the state machine SM, contain the list of methods of which each transition function F1, F2 is constituted.

Examples of functional modules FM1, FM2, .. include:
- communication stacks, protocol stacks (e.g. SIP, RTP, HTTP, TCP, UDP) audio/video stacks for specific codecs;
- database utilities, e.g. get, set;
- generic utilities, e.g. logging, configuration setting, system file access.

Examples of methods exposed by the functional modules FM1, FM2, .. and invoched by the transision functions F1, F2, .. include:
- start_SIP_session(), and SIP_register() beloning to SIP stack FM;
- encode_audioAMR_frame(), decode_videoH263_frame() belonging respectively to audio and video stack functional modules FM1, FM2, .. ;
- transmit_RTPAudio_frame(), transmit_RTPVideo_frame(), belonging to RTP stack functional module FM1, FM2, .. .

Each functional module FM1, FM2, .. is composed by an hardware abstract layer and by a wrapper.
The hardware abstract layer is responsible of interfacing the capabilities that are depending on the specific operating system used. The wrapper provides simple and portable APIs that are operating system independent and can be used by the state machine SM and if needed by methods of other functional modules FM1, FM2, .. .

Thus, each functional module FM1, FM2, .. provides one or more methods which are called, by the transition functions F1, F2 ... (whereas each transition function may call one of more methods belonging to one or more functional modules) and, when needed, by other functional modules, via high level APIs/methods.

The application repository server ARS shown in Figures 2 and 3 is located at the premises of the service provider and is accessible by the host devices MT1, FT2, AS1, AS2 via the network. The application repository server ARS facilitates the deployment of an application and its downloading on the host devices MT1, FT2, AS1, AS2.

The application repository server ARS contains the specific source code defining the state machine SM characterising a certain application. In the application repository server ARS, the service provider operator stores the description of the state machine SM for all the applications to be offered together with their new updates.

In addition, as shown in Figure 2, the basic SAF framework may be provided with two modules which are also facilitating the application service deployment: a state machine repository SMR and a state machine manager SMM.

The state machine repository SMR contains state machine strings, i.e. the states S1, S2, .. , the transition events E1, E2, .. and the transition functions F1, F2, .. , of a subset of all the applications available at the application repository server ARS.

The state machine manager (SMM) instantiates, via logical connection A3, the state machine SM for a certain application by taking input data from the state machine repository SMR.

In addition, the state machine manager SMM, is able to manage the different downloaded applications, and to instantiate, via logical connection A3, the state machine SM for a certain application by taking input data from the state machine repository SMR.

Moreover, the state machine manager SMM allows the user to select the applications among those present in the state machine repository (SMR).

In the simplest SAF installation, the state machine repository SMR of the host device MT1, FT2, AS1, AS2 contains only the state machine SM for initializing the application (i.e., the downloading application) that is used to download new applications.

The user can download updated or new applications (i.e., state machines) from the application repository server ARS to the state machine repository through logical connections A1, A2.

Here below the process on how the offered applications are deployed on the host devices is described in more details.

The host devices MT1, FT2, AS1, AS2 have the SAF framework installed, i.e. they are provided with the functionality of running an application via its state machine SM and with the set of functional modules FM1, FM2, .. .

In order to deploy a new specific application on the host device MT1, FT2, AS1, AS2, the state machine SM for the specific application is downloaded on the host device MT1, FT2, AS1, AS2 from the application repository server ARS. The state machine SM of the specific application is stored in the state machine repository SMR of the host device MT1, FT2, AS1, AS2.

As mentioned above, the specific state machine SM of an application is defined by a set of tuples, in which each tuple defines:
- a transition from an initial state S1, S2, .. to an arrival state S1, S2, ..;
- an event E1, E2, .. generating such transition; and
- a transition function F1, F2, .. containing a set of executable methods.

The state machine manager SMM manages the instantiation of the state machine as described below in an example embodiment according to the present invention.

Optionally, under request, an updated user interface UI, e.g. new buttons, new windows and frames, may be downloaded and instantiated.

In order to update an existing application on the host device MT1, FT2, AS1, AS2, the "variation" of the state machine SM for the specific application is downloaded on the host device MT1, FT2, AS1, AS2 from the application repository server ARS. Such "variation" of the state machine may include new transition states S1, S2, .., new transition events E1, E2, .. and the new transition functions F1, F2, .. .
Also in case of application updates, the state machine SM of the specific application is stored in the state machine repository SMR and it is instantiated by the state machine manager SMM.

Figure 3 shows a flow chart illustrating a state machine SM for an application in a further example embodiment according to the present invention. Figure 3 depicts examples of transitions between states S1, S2, .. in presence of a certain sequence of events E1, E2, ...

The specific example of the state machine SM of Figure 3 is characterized by:
- the set of states S = {IDLE S1, SIP stack S2, RTP stack S3, Flow Control Layer S4, Audio layer S5, Video layer S6}.
- The initial state so belonging to S called IDLE state S1.
- the final set of states F= {IDLE S1}
- the joint transition event set and transition function set, Σ U δ, defined in Table 1.

**Table 1**

| Arrival | S1 | S2 | S3 | S4 | S5 | S6 | |
|---|---|---|---|---|---|---|---|
| state | | | | | | | 10 |
| Initial State | | | | | | | |
| S1 | E1 | E2 | E3 | | | | 15 |
| | F0 | F2 | F3 | | | | |
| S2 | E1 | | E2 | | E3 | | |
| | F1 | | F5 | | F6 | | |
| S3 | E1 | | | E2 | E3 | E4 | |
| | F4 | | | F8 | F9 | F10 | 20 |
| S4 | | | | | E1 | E2 | |
| | | | | | F13 | F17 | |
| S5 | E3 | | | E2 | | E1 | |
| | F7 | | | F14 | | F15 | |
| S6 | E4 | | E1 | E2 | E2 | | 25 |
| | F12 | | F11 | F17 | F17 | | |

Table 1 is the table defining the union of the transition event set Σ and transition function set δ for the state machine shown in Figure 3.

For example, if the state machine SM is in the initial IDLE state S1 and event E1 occurs, transition function F0 is executed and the arrival state is IDLE S1. Alternatively, if the state machine is in Flow Control Layer state S4 and event E1 occurs, transition function F13 is executed and the arrival state is Audio Layer state S5.

As shown in the example of Figure 3 and of Table 1, if the state machine SM is in a certain state, e.g. the IDLE state S1 and in this state a certain event is delivered by the event manager EM which is not defined as a transition event, e.g. event E4, such delivered event will be ignored and optionally with more sophisticated EM an error message may be sent back to the event manager EM.

The following list is an example for the transition functions F1, F2, F3, F9, F7 (the error cases are excluded in this simple scenario):
- transition function F1 containing:
   ◊ read_input_file(): read from properties file (local/remote) all necessary input data;
   ◊ check_features(): check functionality and reset all wrappers (modules collection functionality).
- transition function F2 containing:
   ◊ init_SIP_stack(): initiatize SIP stack;
   ◊ SIP_register(): start a SIP registration; input to this method is generated by the output of F1 methods.
- transition function F3 containing:
   ◊ init_RTP_stack(): initiatize RTP stack;
   ◊ create_RTP_wrapper(): create instance of RTP wrapper.
- transition function F9 containing:
   ◊ init_audio_stack(): initiatize AUDIO stack
   ◊ create_audio_txrx(): create thread objects, callback listeners, interaction with RTP object;
   ◊ run_audio_txrx(): run transmission and reception play threads.
- transition function F7 containing:
   ◊ close_audio(): close AUDIO reception and transmission channels;
   ◊ delete_audio_txrx(): destroy thread objects, callback listeners, close interaction with RTP object;
   ◊ stop_audio_txrx(): stop and destroy tx/rx play threads.

For example, a list of events such as {E1, E2, E2, E3, E3, E1}, starting from the IDLE state S1, allows a transition to other states S1, S2, .. and the return back to the initial IDLE state S1. As a result, such event list causes the following transitions in the state machine SM:
1. IDLE S1 -> {"E1", F0(in,out)} -> IDLE S1
2. IDLE S1 -> {"E2", F2(in,out)} -> SIP_STACK S2
3. SIP_STACK S2 -> {"E2", F5(in,out)} -> RTP_STACK S3
4. RTP_STACK S3 -> {"E3", F9(in,out)} -> AUDIO_LAYER S5
5. AUDIO_LAYER S5 -> {"E3", F7(in,out)} -> IDLE S1
6. IDLE S1 -> {"E1", F0(in,out)} -> IDLE S1

Wherein, parameters (in,out) represent the input and output parameters utilized by the methods invoked by the functions.

When an application is requested, the state machine SM needs to be instantiated.
The list of Table 2 provides an exemplary list of methods to instantiate the state machine SM of Figure 3.

The method "StateMachine::addEntry("*Initial State*", "*Event*", "*Transition Function*", "*Arrival State*")" allows to define the transition event that determines the transition between the "Initial State" and the "Arrival State" and the transition function F1, F2, .. .

**Table 2**

| |
|---|
| *StateMachine::addEntry("IDLE","E1","F0","IDLE");* *StateMachine::addEntry("IDLE","E2","F2","SIP_STACK");* *StateMachine::addEntry("JDLE","E3","F3","RTP_STACK");* |
| *StateMachine::addEntry("SIP_STACK","E1","F1","IDLE");* *StateMachine::addEntry("SIP_STACK","E2","F5","RTP_STACK");* *StateMachine::addEntry("SIP_STACK","E3","F6","AUDIO_LAYER");* |
| *StateMachine::addEntry("RTP_STACK","E1","F4","IDLE");* *StateMachine::addEntry("RTP_STACK","E2","F8", "FLOOR_CONTROL_LAYER");* *StateMachine::addEntry("RTP_STACK","E3","F9","AUDIO_LAYER");* *StateMachine::addEntry("RTP_STACK","E4","F10","VIDEO_LAYER");* |
| *StateMachine::addEntry("FLOOR_CONTROL_LAYER","E1","F13","AUDI O_LAYER");* *StateMachine::addEntry("FLOOR_CONTROL_LAYER","E2","F17", "VIDEO_LAYER");* |
| *StateMachine::addEntry("AUDIO_LAYER","E1","F14","FLOOR_CONTRO L_LAYER");* *StateMachine::addEntry("AUDIO_LAYER","E2","F15","VIDEO_LAYER) ;* *StateMachine::addEntry("AUDIO_LAYER","E3","F7","IDLE");* |
| *StateMachine::addEntry("VIDEO_LAYER","E1","F11","RTP_STACK");* |
| *StateMachine::addEntry("VIDEO_LAYER","E2","F16","AUDIO_LAYER) ;* *StateMachine::addEntry("VIDEO_LAYER","E3","F18", "FLOOR_CONTROL_LAYER");* *StateMachine::addEntry("VIDEO_LAYER","E4","F12","IDLE") .* |

### List of used acronyms

| | |
|---|---|
| AMR | Adaptive Multi Rate |
| FIFO | First In First Out |
| H263 | ITU-T Video codec |
| HTTP | Hypertext Transfer Protocol |
| IP | Internet Protocol |
| OPI | Open Program Interface |
| RTP | Real Time Protocol |
| SAF | "Smart Adaptive Framework" |
| SIP | Session Initiation Protocol |
| TCP | Transmission Control Protocol |
| UDP | User Datagram Protocol |

### List of reference signs

| | |
|---|---|
| A1, A2, .. | logical connection between SAF modules |
| AN | fixed/wireless access network |
| AS1, AS2 | application server |
| ARS | application repository server |
| E1, E2, .. | |
| EM | event manager |
| F1 | transition function |
| FM1, FM2, .. | functional module |
| FT1, FT2 | fixed end-user terminal, fixed terminal |
| IPN | IP network |
| MN | mobile access network |
| MT1, MT2 | mobile end-user terminal, mobile terminal, |
| | mobile handheld device |
| S1, S2, .. | state |
| SM | state machine |
| SMM | state machine manager |
| SMR | state machine repository |
| SPN | service provider network |

## Claims

1. A method for deploying an application on a host device (MT1, FT2, AS1, AS2) accessible via a network, said method comprising the steps of:
a) providing the host device (MT1, FT2, AS1, AS2) with a functionality for running an application definable via a state machine (SM);
b) providing the host device (MT1, FT2, AS1, AS2) with functional modules (FM1, FM2,..); each functional module (FM1, FM2, ..) comprising a set of executable methods; said method being **characterized in that** it further comprises the step of:
c) deploying the application on the host device (MT1, FT2, AS1, AS2) by storing, within said host device (MT1, FT2, AS1, AS2), tuples specifying the state machine (SM) defining said application; wherein a tuple defines an event (E1, E2, ..) generated transition from an initial state (S1, S2, ..) to an arrival state (S1, S2, ..) and a subset of said executable methods.

2. The method according to claim 1, wherein the stored tuples specifying the state machine (SM) defining the application are downloaded from a repository server (ARS) via the network.

3. The method according to any of the preceding claims, wherein the stored tuples are located in an additional repository server located (SMR) within the host device (MT1, FT2, AS1, AS2).

4. The method according to any of the preceding claims, wherein the stored tuples are used to instantiate the state machine (SM) by a state machine manager module (SMM).

5. The method according to any of the preceding claims, wherein the events (E1, E2, ..), generated either by an user interface module (UI) or by the executable methods, are managed by an event manager module (EM).

6. The method according to any of the preceding claims, wherein the host devices have the functionality of end-user terminals (MT1, MT2, FT1, FT2) or of application servers (AS1, AS2).

7. The method according to any of the preceding claims, wherein the executable methods are contained within functional modules (FM1, FM2, ..) located within the host devices (MT1, FT2, AS1, AS2); said functional modules (FM1, FM2, ..) having an operating system independent layer and an operating system dependent layer.

8. A method for developing an application on a host device (MT1, FT2, AS1, AS2), said method comprising the steps of:
a) developing, for the host device (MT1, FT2, AS1, AS2), a functionality for running an application definable via a state machine (SM);
b) providing for the host device (MT1, FT2, AS1, AS2) functional modules (FM1, FM2,..); each functional module (FM1, FM2,..) comprising a set of executable methods;
said method being **characterized in that** it further comprises the step of:
c) developing the application for the host device (MT1, FT2, AS1, AS2) by defining tuples specifying the state machine (SM) for the application; wherein a tuple defines an event (E1, E2, ..) generated transition from an initial state (S1, S2, ..) to an arrival state (S1, S2, ..) and a subset of said executable methods.

9. A system having means for deploying an application on a host device (MT1, FT2, AS1, AS2) accessible via a network, including:
a) an application repository server (ARS) for storing the state machine strings of the applications to be deployed;
b) a state machine repositery (SMR) local to the host device containing state machine strings;
c) a state machine manager (SMM)connected to said application repository server (ARS) and to said state machine repositery (SMR),
**characterized**ing that includes also:
d) a state machine module (SM) instantiated by said state machine manager (SMM) from the state machine string;
e) an event manager module (EM) adapted to manage events and to submit triggers to said state machine module(SM);
f) at least one functional module (FM1, FM2...) comprising a set of methods invoked by transition functions of the state machine module (SM) and supplying to the event manager (EM) events generated by the execution of specific methods.

10. The system of claim 9 **characterized in that** said event manager (EM) is also adapted to receive events generated by an user interface module(UI) interfacying the user and generating events to said event manager (EM).
